(19) **Europäisches Patentamt**
**European Patent Office**
**Office européen des brevets**

(11) **EP 4 470 829 A1**

(12) **EUROPEAN PATENT APPLICATION**
published in accordance with Art. 153(4) EPC

(43) Date of publication:
04.12.2024   Bulletin 2024/49

(51) International Patent Classification (IPC):
*B60L 58/20* (2019.01)     *B60L 3/00* (2019.01)
*B60L 5/00* (2006.01)      *B60L 53/12* (2019.01)
*B60M 7/00* (2006.01)      *H02J 7/00* (2006.01)
*H02J 50/10* (2016.01)

(21) Application number: 22924084.1

(22) Date of filing: 28.11.2022

(52) Cooperative Patent Classification (CPC):
**B60L 3/00; B60L 5/00; B60L 53/12; B60L 58/20;**
**B60M 7/00; H02J 7/00; H02J 50/10;** Y02T 10/72

(86) International application number:
**PCT/JP2022/043773**

(87) International publication number:
**WO 2023/145232 (03.08.2023 Gazette 2023/31)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority:  25.01.2022   JP 2022009662

(71) Applicants:
• **TOYOTA JIDOSHA KABUSHIKI KAISHA**
  **Toyota-shi**
  **Aichi 471-8571 (JP)**
• **DENSO CORPORATION**
  **Kariya-shi, Aichi  448-8661 (JP)**

(72) Inventors:
• **KIMURA, Kazutaka**
  **Toyota-shi, Aichi 471-8571 (JP)**

• **HASHIMOTO, Toshiya**
  **Toyota-shi, Aichi 471-8571 (JP)**
• **HASHIMOTO, Makoto**
  **Toyota-shi, Aichi 471-8571 (JP)**
• **YAMAGUCHI, Nobuhisa**
  **Kariya-shi, Aichi 448-8661 (JP)**
• **KANESAKI, Masaki**
  **Kariya-shi, Aichi 448-8661 (JP)**
• **TANI, Keisuke**
  **Kariya-shi, Aichi 448-8661 (JP)**
• **OBAYASHI, Kazuyoshi**
  **Kariya-shi, Aichi 448-8661 (JP)**
• **TAKEMURA, Yuichi**
  **Kariya-shi, Aichi 448-8661 (JP)**

(74) Representative: **TBK**
  **Bavariaring 4-6**
  **80336 München (DE)**

(54) **VEHICLE**

(57)   A vehicle of the present invention includes: a wireless power receiver that receives power in a wireless manner from a plurality of wireless power transmitters arranged at predetermined intervals in a vehicle traveling direction on a traveling path; an inverter that exchanges power with a rotating electric machine; a first power supply; a second power supply having a higher output density and a lower capacity density than the first power supply; and a DC-DC converter that exchanges power with the first power supply, in which the wireless power receiver, the inverter, the DC-DC converter, and the second power supply are electrically connected in parallel to a power bus that supplies power from the wireless power receiver to the inverter, and the first power supply and the power bus are electrically connected via the DC-DC converter.

# FIG.2

**Description**

FIELD

The present invention relates to a vehicle.

BACKGROUND

Patent Literature 1 discloses a vehicle capable of supplying power, which is received by a wireless power receiver in a wireless manner from a plurality of wireless power transmitters installed on a traveling path by dynamic wireless power transfer, to a motor generator (inverter) and a battery that is a power supply via a DC-DC converter.

CITATION LIST

PATENT LITERATURE

Patent Literature 1: Japanese Laid-open Patent Publication No. 2014-147160

SUMMARY

TECHNICAL PROBLEM

However, in the vehicle disclosed in Patent Literature 1, power transmission coils are discretely arranged, power is discretely fed according to a vehicle traveling position, and the power received by the wireless power receiver from the wireless power transmitters greatly fluctuates. Thus, a bus voltage of when power is supplied from the wireless power receiver to the motor generator (inverter) or the battery also greatly fluctuates, and deterioration due to charging and discharging of the battery is caused.
The present invention has been made in view of the above problem, and an object thereof is to provide a vehicle capable of controlling deterioration of a power supply.

SOLUTION TO PROBLEM

To resolve the above problem and attain the object, a vehicle according to the present invention includes: a wireless power receiver that receives power in a wireless manner from a plurality of wireless power transmitters arranged at predetermined intervals in a vehicle traveling direction on a traveling path; a rotating electric machine capable of generating driving force for traveling; an inverter that exchanges power with the rotating electrical machine; a first power supply; a second power supply having higher output density and lower capacity density than the first power supply has; and a DC-DC converter that exchanges power with the first power supply. Further, the wireless power receiver, the inverter, the DC-DC converter, and the second power supply are electrically connected in parallel to a power bus that supplies power from the wireless power receiver to the inverter, and the first power supply and the power bus are electrically connected via the DC-DC converter.
As a result, the DC-DC converter is provided between the first power supply and the power bus and charging and discharging of the first power supply due to fluctuation of the power received by the wireless power receiver from the wireless power transmitters can be controlled, whereby deterioration of the first power supply can be controlled.
Further, in the above configuration, the wireless power receiver and the power bus may be electrically connected directly.
As a result, it is possible to control a power loss of when the power is supplied from the wireless power receiver to the inverter through the power bus.
Further, in the above configuration, the first power supply may be a secondary battery, and the second power supply may be a capacitor.
As a result, components generally mounted on the vehicle can be used as the first power supply and the second power supply.
Further, in the above configuration, a DC-DC conversion command value in the DC-DC converter may be set in such a manner that a desired bus average voltage according to required power of the rotating electric machine is acquired.
As a result, the bus average voltage clamped by the second power supply can be adjusted by adjustment of an average charging/discharging amount of the first power supply.
Further, in the above configuration, feedback control of the DC-DC conversion command value may be performed according to a difference between a target bus voltage and an actual bus voltage.

As a result, control accuracy of the bus average voltage can be improved.

Further, in the above configuration, in a case where the wireless power receiver is a current type, a bus voltage may be increased as power consumption of the rotating electric machine is larger.

As a result, as the power consumption of the rotating electric machine is larger, the wireless power receiver can receive a larger amount of power from the wireless power transmitters by the dynamic wireless power transfer.

Further, in the above configuration, in a case where the wireless power receiver is a voltage type, a bus voltage may be set according to power consumption of the rotating electric machine and average received power of the wireless power receiver.

As a result, as the power consumption of the rotating electric machine is larger, the wireless power receiver can receive a larger amount of power from the wireless power transmitters by the dynamic wireless power transfer.

Further, in the above configuration, a bus target voltage may be set in such a manner that the power supplied from the wireless power receiver to the first power supply is reduced in a case where a side of the wireless power receiver does not have a regeneration function of returning the power to a system side and the rotating electrical machine performs regenerative operation.

As a result, even when the bus voltage increases due to regenerative power from the rotating electric machine, when the power supplied from the wireless power receiver to the first power supply is decreased, it is possible to prevent the power supplied from the rotating electric machine and the wireless power receiver to the first power supply from becoming too large and the first power supply from becoming likely to deteriorate.

Further, in the above configuration, a PWM duty of when PWM control of rotational driving of the rotating electric machine is performed may be determined on a basis of a fluctuation of the power received by the wireless power receiver from the wireless power transmitters.

As a result, even when the bus voltage fluctuates due to a power ripple in the dynamic wireless power transfer, accuracy of the PWM control can be secured.

Further, in the above configuration, a bus voltage may be estimated on a basis of a vehicle position or a vehicle speed.

As a result, since a distance between the wireless power transmitters adjacent in a vehicle traveling direction is constant, it is possible to calculate a movement distance of the vehicle from a current vehicle speed and to calculate a relative position of the vehicle with respect to each of the plurality of wireless power transmitters. Thus, on the basis of the above, it is possible to estimate a fluctuation component (repetition) of the power received by the wireless power receiver from the wireless power transmitters by the dynamic wireless power transfer.

Further, in the above configuration, the vehicle may further include a rotating electric machine for power generation in addition to the rotating electric machine capable of generating the driving force for traveling. Further, both the rotating electric machine for power generation and the DC-DC converter compensate for a fluctuation component in a bus voltage which fluctuation component is caused by a power ripple.

As a result, the loss in the DC-DC converter can be further reduced.

ADVANTAGEOUS EFFECTS OF INVENTION

The vehicle according to the present invention has an effect that deterioration of the first power supply can be controlled since the DC-DC converter is provided between the first power supply and the power bus and charging and discharging of the first power supply due to fluctuation of the power received by the wireless power receiver from the wireless power transmitters can be controlled.

BRIEF DESCRIPTION OF DRAWINGS

FIG. 1 is a view schematically illustrating a vehicle according to an embodiment.
FIG. 2 is a block diagram for describing a configuration of the vehicle.
FIG. 3 is a view for describing a fluctuation in DWPT power.
FIG. 4(a) is a graph illustrating a relationship between a DC link voltage and DWPT power in a current-type dynamic wireless power transfer system. FIG. 4(b) is a graph illustrating a relationship between the DC link voltage and an MG output.
FIG. 5(a) is a graph illustrating a relationship between a DC link voltage and DWPT power in a voltage-type dynamic wireless power transfer system. FIG. 5(b) is a graph illustrating a relationship between the DC link voltage and the MG output.
FIG. 6 is a view for describing a calculation method of a bus voltage prediction value.
FIG. 7 is a graph illustrating a relationship between an SOC and a voltage of a capacitor as a characteristic of the capacitor.

FIG. 8 is a view for describing a difference in a cycle of fluctuation of the DWPT power depending on a vehicle speed.

FIG. 9 is a block diagram for describing a configuration of a vehicle including two motor generators.

## DESCRIPTION OF EMBODIMENTS

Hereinafter, an embodiment of a vehicle according to the present invention will be described. Note that the present invention is not limited by the present embodiment.

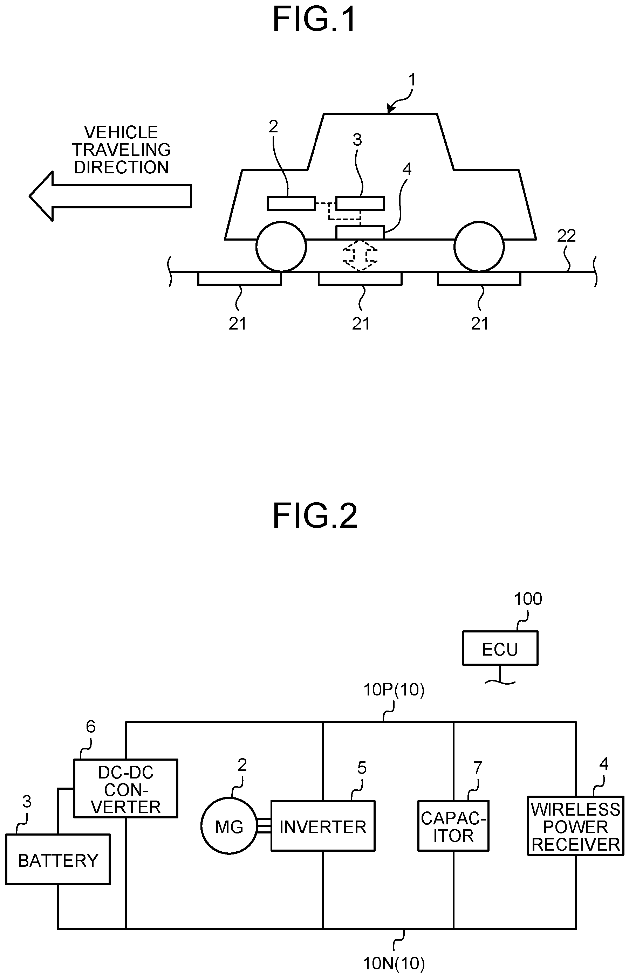

FIG. 1 is a view schematically illustrating a vehicle 1 according to an embodiment. The vehicle 1 according to the embodiment is an electric vehicle equipped with a motor generator 2 as a power source for traveling. In the vehicle 1, for example, the motor generator 2 is driven when power stored in a battery 3 is supplied to the motor generator 2. Power output from the motor generator 2 is transmitted to driving wheels via a power transmission device.

In addition, the vehicle 1 according to the embodiment includes a wireless power receiver 4 that can receive power, which is supplied from a wireless power transmitter 21 having a power transmission coil and installed on a road 22 that is a traveling path on which the vehicle 1 can travel, in a wireless manner by a power reception coil. Note that a dynamic wireless power transfer (DWPT) system in which power can be fed from the wireless power transmitter 21 to the wireless power receiver 4 in a wireless manner while the vehicle 1 is traveling includes the wireless power transmitter 21 and the wireless power receiver 4 in the present embodiment. Then, in the vehicle 1 according to the embodiment, the power received by the wireless power receiver 4 from the wireless power transmitter 21 by the dynamic wireless power transfer is supplied to the motor generator 2 and the battery 3.

FIG. 2 is a block diagram for describing a configuration of the vehicle 1. As illustrated in FIG. 2, the vehicle 1 according to the embodiment includes the motor generator 2, the battery 3, the wireless power receiver 4, an inverter 5, a DC-DC converter 6, a capacitor 7, a power bus 10, and an electronic control unit (ECU) 100. The power bus 10 includes a power bus for a positive electrode 10P and a power bus for a negative electrode 10N. Then, in the vehicle 1 according to the embodiment, the wireless power receiver 4, the inverter 5, the DC-DC converter 6, and the capacitor 7 are arranged in parallel and electrically connected to the power bus 10 between the power bus for a positive electrode 10P and the power bus for a negative electrode 10N. In addition, a positive electrode-side terminal of the battery 3 is electrically connected to the DC-DC converter and a negative electrode-side terminal thereof is electrically connected to the power bus for a negative electrode 10N of the power bus 10, and the battery 3 is electrically connected to the power bus 10 via the DC-DC converter 6. In addition, the motor generator 2 is electrically connected to the inverter 5 in such a manner that three-phase AC power can be transmitted and received.

The motor generator (MG) 2 is a rotating electrical machine having a function as an electric motor and a function as a generator. For example, when the vehicle 1 travels by the power of the motor generator 2, the ECU 100 that is an electronic control device controls the inverter 5, whereby torque output from the motor generator 2 is controlled.

The battery 3 is a first power supply and is a secondary battery capable of storing power to be supplied to the motor generator 2. Note that a component generally mounted on the vehicle (electric vehicle) can be used, and for example, a lithium ion battery or the like can be used as the secondary battery. The battery 3 stores the power received by the wireless power receiver 4 and having a voltage adjusted by the DC-DC converter 6. In addition, the battery 3 supplies power for generating vehicle driving force by the motor generator 2 to the inverter 5 via the DC-DC converter 6. Furthermore, the battery 3 stores power generated by regenerative operation of the motor generator 2 via the DC-DC converter 6.

Note that although not illustrated, the battery 3 is provided with a voltage sensor and a current sensor to detect a voltage of the battery 3 and an input/output current. These detection values are output to the ECU 100. The ECU 100 calculates a state of charge (SOC) of the battery 3 on the basis of the voltage and the current detected by the voltage sensor and the current sensor.

The wireless power receiver 4 includes the power reception coil capable of receiving power in a wireless manner from the power transmission coil of the wireless power transmitter 21 installed on the road 22, for example, while the vehicle 1 is traveling. Then, for example, the power is transmitted from the wireless power transmitter 21 to the wireless power receiver 4 in a state in which the wireless power receiver 4 is located within a range of a predetermined distance from the wireless power transmitter 21. The power supplied from the wireless power transmitter 21 to the wireless power receiver 4 is transmitted to the motor generator 2, the battery 3, and the like.

The inverter 5 can exchange power with the motor generator 2, and converts DC power from the power bus 10 into AC power and supplies the AC power to the motor generator 2, and converts AC power from the motor generator 2 into DC power and supplies the DC power to the power bus 10.

The DC-DC converter 6 adjusts a pressure of the power exchanged between the power bus 10 and the battery 3 (power charged and discharged by the battery 3).

The capacitor 7 is a second power supply having higher output density and lower capacity density than the first power supply (battery 3), and can temporarily store a part of the power supplied from the wireless power receiver 4 to the power bus 10. As the capacitor 7, a component generally mounted on the vehicle (electric vehicle) can be used, and, for example, an electrical double layer capacitor (EDLC), a lithium ion capacitor (LIC), a super redox capacitor (SRC), and the like can be used.

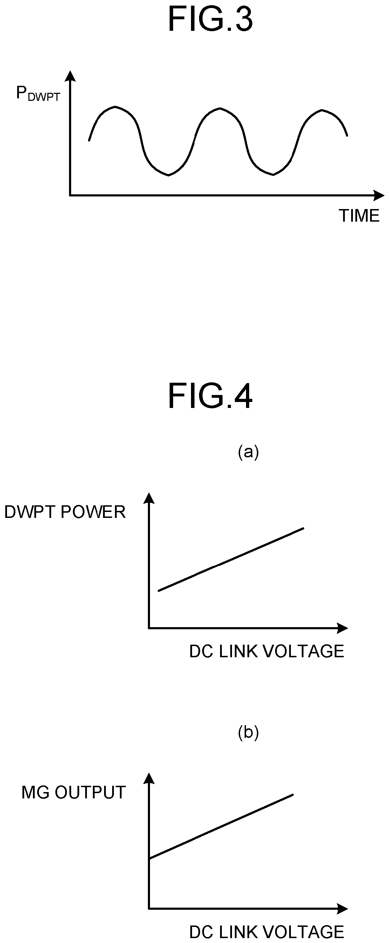

Here, as illustrated in FIG. 1, a plurality of the wireless power transmitters 21 is discretely arranged on the road 22 in a vehicle traveling direction. In the dynamic wireless power transfer system, in a case where wireless power transfer from the wireless power transmitters 21 installed on the road 22 to the wireless power receiver 4 provided in the vehicle 1 during traveling of the vehicle 1 (dynamic wireless power transfer) is performed, as illustrated in FIG. 3, unlike pantograph power transfer of a contact power transfer system, DWPT power ($P_{DWPT}$) that is power supplied from the wireless power transmitters 21 to the wireless power receiver 4 greatly fluctuates. In other words, a large power ripple is generated in the DWPT power received by the wireless power receiver 4. Thus, a bus voltage that is a voltage of the power bus 10 of when the power is supplied from the wireless power receiver 4 to the motor generator 2 (inverter 5) and the battery 3 (DC-DC converter 6) also greatly fluctuates, and deterioration of the battery 3 and deterioration of controllability of the motor generator 2 are caused. In the dynamic wireless power transfer, the cause of the fluctuation of the power received by the wireless power receiver 4 from the wireless power transmitters 21 is, for example, that the power is discretely fed from the plurality of wireless power transmitters 21 discretely arranged on the road 22 in the vehicle traveling direction, or that the power is fed while relative positions of the wireless power transmitters 21 and the wireless power receiver 4 change due to a positional deviation in a left and right direction.

Thus, in the vehicle 1 according to the embodiment, a bus having a large voltage fluctuation is connected to the battery 3 via the DC-DC converter 6, the converted power by the DC-DC converter 6 is leveled (mainly, a DC component is converted), and the input/output power ripple of the battery 3 is controlled, whereby the deterioration of the battery 3 can be controlled. The capacitor 7 is charged and discharged for power of a difference between the received power having a large fluctuation from the wireless power receiver 4 and leveled power exchanged with the battery 3 via the DC-DC converter 6, and the bus voltage also fluctuates according to the power fluctuation. A method of controlling deterioration of motor generator control which deterioration is caused by the bus voltage fluctuation will be described later.

In addition, in the vehicle 1 according to the embodiment, since the power is fed from the wireless power receiver 4 to the inverter 5 directly without the DC-DC converter 6, a power loss can be reduced as compared with a case where the power is supplied from the wireless power receiver 4 to the inverter 5 via the DC-DC converter 6.

In addition, in the vehicle 1 according to the embodiment, the DC-DC converter 6 is provided between the battery 3 and the power bus 10, and it is possible to control charging and discharging of the battery 3 due to fluctuation of the power received by the wireless power receiver 4 from the wireless power transmitters 21. Thus, it is possible to reduce the capacity of the battery 3. Note that it is possible to reduce the loss by using, as the DC-DC converter 6, a small-capacity DC-DC converter for conversion of the power charged and discharged by the battery 3.

In addition, in the vehicle 1 according to the embodiment, the wireless power receiver 4 and the power bus 10 are directly connected without the DC-DC converter 6 being connected between the wireless power receiver 4 and the power bus 10. As a result, in the vehicle 1 according to the embodiment, since the power is supplied from the wireless power receiver 4 to the motor generator 2 (inverter 5) through the power bus 10 without passing through the DC-DC converter 6, the power loss in the DC-DC converter 6 can be reduced as compared with a case where the DC-DC converter 6 is connected between the wireless power receiver 4 and the power bus 10 and the power is supplied from the wireless power receiver 4 to both the motor generator 2 (inverter 5) and the battery 3 through the power bus 10 via the DC-DC converter 6.

In addition, in the vehicle 1 according to the embodiment, a DC-DC conversion command value in the DC-DC converter 6 is set in such a manner as to acquire a desired bus average voltage according to MG power (required power of the motor generator 2 in the dynamic wireless power transfer system). In other words, the DC-DC conversion command value is set according to the MG power command value and a battery charging/discharging power command value. As a result, in the vehicle 1 according to the embodiment, the bus average voltage clamped by the capacitor 7 can be adjusted by an adjustment of the battery charging/discharging average amount.

In the vehicle 1 according to the embodiment, the bus voltage of the power bus 10 is controlled according to the DC link voltage and the received power of the wireless power receiver 4 in the dynamic wireless power transfer system is controlled. For example, in the vehicle 1 according to the embodiment, feedback-control of the DC-DC converter conversion command value is performed according to a difference between the target bus voltage and the actual bus voltage. As a result, control accuracy of the bus average voltage can be improved.

FIG. 4(a) is a graph illustrating a relationship between a DC link voltage and DWPT power in a current-type dynamic wireless power transfer system. FIG. 4(b) is a graph illustrating a relationship between the DC link voltage and an MG output.

In a case where the current type (such as immittance or SS) is adopted as the wireless power receiver 4 included in the dynamic wireless power transfer system, as illustrated in FIG. 4(a), a relationship in which the DWPT power increases as the DC link voltage increases is satisfied. In addition, in the DC link voltage, as illustrated in FIG. 4(b), the required DC link voltage increases as the MG output (power consumption of the motor generator 2) increases. Thus, in the vehicle 1 according to the embodiment, in a case where the wireless power receiver 4 is the current type, the DWPT power is increased in order to increase the DC link voltage (bus voltage) as the MG output is larger. As a result, as the power consumption of the motor generator 2 becomes larger, the wireless power receiver 4 can receive a larger amount of power from the wireless power transmitters 21 by the dynamic wireless power transfer.

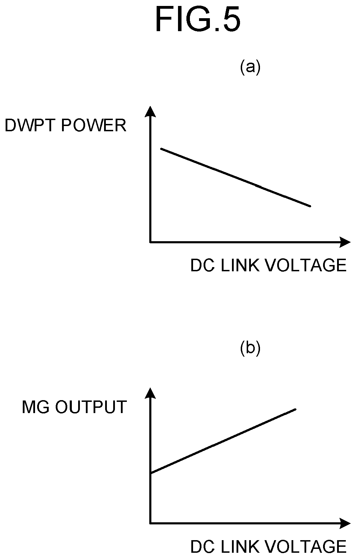

FIG. 5(a) is a graph illustrating a relationship between a DC link voltage and DWPT power in a voltage-type dynamic wireless power transfer system. FIG. 5(b) is a graph illustrating a relationship between the DC link voltage and an MG output.

In a case where the voltage type (such as BPF or PP) is adopted for the wireless power receiver 4 included in the dynamic wireless power transfer system, as illustrated in FIG. 5(a), the average received power of the wireless power receiver 4 decreases as the DC link voltage (bus voltage) increases. Thus, the DC link voltage (bus voltage) at which the MG output (power consumption of the motor generator 2) illustrated in FIG. 5(b) and the average received power can be balanced is set. As a result, as the power consumption of the motor generator 2 becomes larger, the wireless power receiver 4 can receive a larger amount of power from the wireless power transmitters 21 by the dynamic wireless power transfer.

In addition, in the vehicle 1 according to the embodiment, in a case where the dynamic wireless power transfer system side has no regeneration function of returning power to a system side and the motor generator 2 performs the regenerative operation, a bus target voltage is set in such a manner as to reduce the power supplied from the wireless power receiver 4 to the battery 3. As a result, even when the bus voltage increases due to regenerative power from the motor generator 2, since the power supplied from the wireless power receiver 4 to the battery 3 is reduced, it is possible to prevent the power supplied from the motor generator 2 and the wireless power receiver 4 to the battery 3 from becoming too large and the battery 3 from being easily deteriorated.

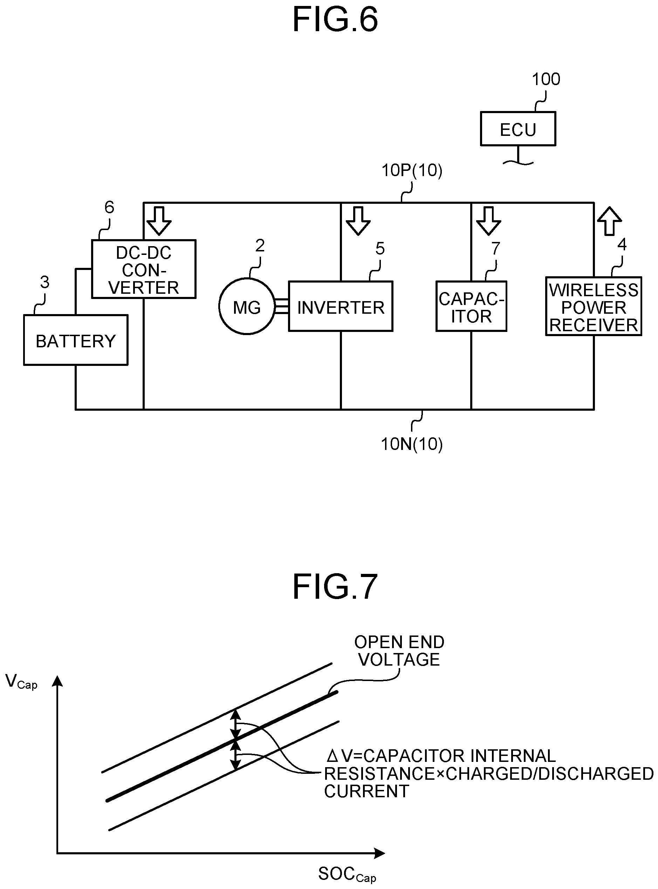

FIG. 6 is a view for describing a calculation method of a bus voltage prediction value. Note that a white arrow in FIG. 6 indicates a current flow direction. FIG. 7 is a graph illustrating a relationship between an SOC and a voltage of a capacitor 7 as a characteristic of the capacitor 7. In FIG. 7, an $SOC_{Cap}$ is an SOC of the capacitor 7, and $V_{Cap}$ is a voltage of the capacitor 7.

In addition, in the vehicle 1 according to the embodiment, a PWM duty at the time of performing PWM control of rotational driving of the motor generator 2 is determined on the basis of the fluctuation of the power received by the wireless power receiver 4 from the wireless power transmitters 21 by the dynamic wireless power transfer. The PWM duty is calculated by, for example, the following Formula (1).

Formula (1)

$$\text{PWM DUTY} = \frac{\text{OUTPUT COMMAND VOLTAGE}}{\text{BUS VOLTAGE PREDICTION VALUE}} \quad (1)$$

The bus voltage prediction value in the above Formula (1) estimates the bus voltage from the characteristic of the capacitor 7 (relationship between the SOC and the voltage of the capacitor 7) as illustrated in FIG. 7 on the basis of a cyclic DWPT power instantaneous value. At this time, an instantaneous voltage of the capacitor 7 is estimated with a fluctuation component with respect to an open end voltage being included on the basis of input/output power (charged/discharged current) of the capacitor 7 and capacitor internal resistance.

In a case where the power is supplied from the wireless power receiver 4 to the inverter 5 (motor generator 2) and the DC-DC converter 6 (battery 3), the power supplied to the capacitor 7 can be calculated by the following Formula (2). Note that in the following Formula (2), $P_{Cap}$ is the power input to the capacitor 7, $P_{DWPT}$ is the DWPT power (power output from the wireless power receiver 4), $P_{Inv(MG)}$ is the power input to the inverter 5 (motor generator 2), and $P_{DCDC(Bat)}$ is the power input to the DC-DC converter 6 (battery 3).

Formula (2)

$$P_{Cap} = P_{DWPT} - P_{Inv(MG)} - P_{DCDC(Bat)} \quad (2)$$

In the vehicle 1 according to the embodiment, by performing the PWM control of the rotational driving of the motor generator 2 by using the PWM duty calculated by the above Formula (1), it is possible to secure the accuracy of the PWM control even when the bus voltage fluctuates due to the power ripple in the dynamic wireless power transfer.

In addition, in the present embodiment, since an arrangement interval in the vehicle traveling direction of the plurality of wireless power transmitters 21 arranged on the road 22 on which the vehicle 1 is traveling (distance between the wireless power transmitters 21 adjacent in the vehicle traveling direction) is constant, it is possible to calculate a movement distance of the vehicle 1 from a current vehicle speed and to calculate a relative position of the vehicle 1 with respect to each of the plurality of wireless power transmitters 21. Thus, on the basis of the relative position of the vehicle 1 (wireless power receiver 4) with respect to the wireless power transmitters 21, it is possible to estimate a fluctuation component (repetition) of the power received by the wireless power receiver 4 from the wireless power transmitters 21 by the dynamic wireless power transfer.

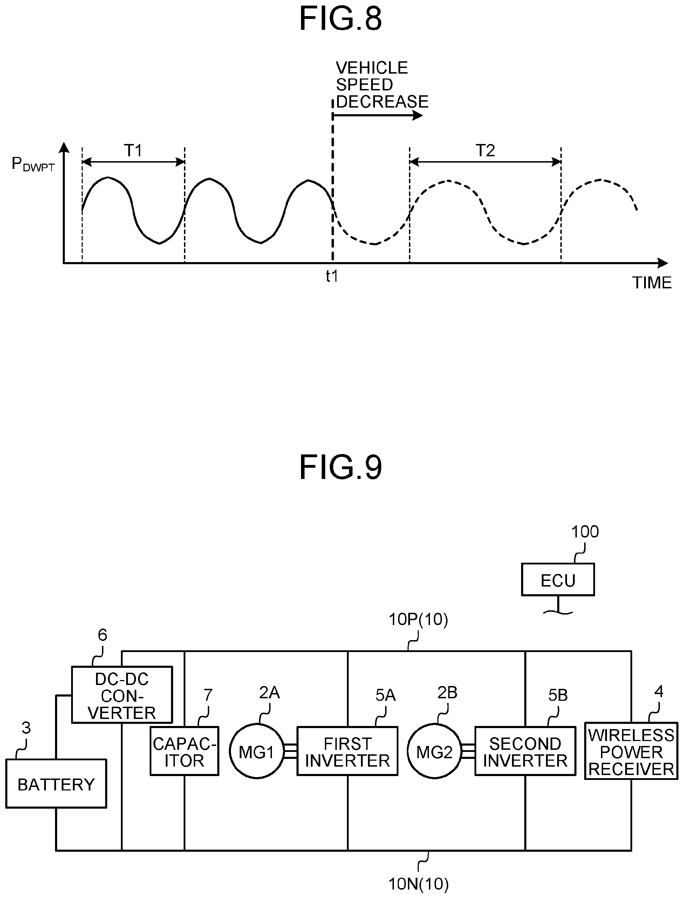

For example, as illustrated in FIG. 8, in a case where the DWPT power (bus voltage) fluctuates during the dynamic wireless power transfer at a predetermined vehicle speed in a cycle Tl, when the vehicle speed decreases to a constant vehicle speed at time t1, the cycle of the fluctuation of the DWPT power (bus voltage) becomes a cycle T2 longer than the cycle T1. Thus, in the vehicle 1 according to the embodiment, it is possible to estimate the DWPT power and thus the bus voltage on the basis of the vehicle position (vehicle speed) on the road 22 when performing the dynamic wireless power transfer.

Note that when the movement distance of the vehicle 1 is calculated from the current vehicle speed and the relative position of the vehicle 1 (wireless power receiver 4) with respect to each of the plurality of wireless power transmitters 21 is calculated, as a vehicle position of a starting point on the road 22, for example, the vehicle position detected at predetermined timing by utilization of a GPS of a car navigation system provided in the vehicle 1 may be set. In addition, the cycle of the fluctuation of the DWPT power (bus voltage) during the dynamic wireless power transfer at a predetermined vehicle speed may be estimated on the basis of a rotation angle of the motor generator 2 instead of the vehicle speed.

FIG. 9 is a block diagram for describing a configuration of a vehicle 1 including two motor generators. The vehicle 1 illustrated in FIG. 9 includes a first motor generator (MG1) 2A, a second motor generator (MG2) 2B, a battery 3, a wireless power receiver 4, a first inverter 5A, a second inverter 5B, a DC-DC converter 6, a capacitor 7, a power bus 10, and an ECU 100. In addition, in the vehicle 1 illustrated in FIG. 9, the wireless power receiver 4, the first inverter 5A, the second inverter 5B, the DC-DC converter 6, and the capacitor 7 are electrically connected to the power bus 10 in parallel. In addition, a positive electrode-side terminal of the battery 3 is electrically connected to the DC-DC converter and a negative electrode-side terminal thereof is electrically connected to a negative electrode side of the power bus 10, and the battery 3 is electrically connected to the power bus 10 via the DC-DC converter 6. The first motor generator 2A is electrically connected to the first inverter 5A. The second motor generator 2B is electrically connected to the second inverter 5B.

In the vehicle 1 illustrated in FIG. 9, the first motor generator 2A is connected to an engine (not illustrated) mounted on the vehicle 1 in such a manner that power can be transmitted, and is mainly used for power generation by driving force from the engine. The power generated by the first motor generator 2A can be supplied to the second motor generator 2B and the battery 3. In addition, in the vehicle 1 illustrated in FIG. 9, the second motor generator 2B is mainly used for generating a driving force for traveling of the vehicle 1.

In the vehicle 1 according to the embodiment, as illustrated in FIG. 9, in a case where two motor generators that are the first motor generator 2A mainly for power generation and the second motor generator 2B mainly for driving force generation are provided, both the first motor generator 2A and the DC-DC converter 6 compensate for a fluctuation component in the bus voltage which fluctuation component is caused by a power ripple in the dynamic wireless power transfer. As a result, in a case where the engine is driven and the power generated by the first motor generator 2A is supplied to the second motor generator 2B while the power is received by the wireless power receiver 4 by the dynamic wireless power transfer (in a case where a request for torque and an output of the second motor generator 2B is large), the power generated by the first motor generator 2A also compensates for the fluctuation component of the bus voltage due to the power ripple. Specifically, a torque command of the first motor generator 2A is varied according to the power fluctuation of the wireless power receiver 4, and this torque fluctuation is smoothed by inertia of the engine. As a result, it is possible to reduce the power output from the battery 3 to compensate for the fluctuation component, and thus, it is possible to further reduce the loss in the DC-DC converter 6.

INDUSTRIAL APPLICABILITY

According to the present invention, it is possible to provide a vehicle capable of controlling deterioration of a power supply.

REFERENCE SIGNS LIST

1 VEHICLE
2 MOTOR GENERATOR
2A FIRST MOTOR GENERATOR
2B SECOND MOTOR GENERATOR
3 BATTERY
4 WIRELESS POWER RECEIVER
5 INVERTER

5A FIRST INVERTER
5B SECOND INVERTER
6 DC-DC CONVERTER
7 CAPACITOR
10 POWER BUS
100 ECU

**Claims**

1. A vehicle comprising:

   a wireless power receiver that receives power in a wireless manner from a plurality of wireless power transmitters arranged at predetermined intervals in a vehicle traveling direction on a traveling path;
   a rotating electric machine capable of generating driving force for traveling;
   an inverter that exchanges power with the rotating electrical machine;
   a first power supply;
   a second power supply having higher output density and lower capacity density than the first power supply has; and
   a DC-DC converter that exchanges power with the first power supply, wherein
   the wireless power receiver, the inverter, the DC-DC converter, and the second power supply are electrically connected in parallel to a power bus that supplies power from the wireless power receiver to the inverter, and
   the first power supply and the power bus are electrically connected via the DC-DC converter.

2. The vehicle according to claim 1, wherein the wireless power receiver and the power bus are electrically connected directly.

3. The vehicle according to claim 1 or 2, wherein

   the first power supply is a secondary battery, and
   the second power supply is a capacitor.

4. The vehicle according to any one of claims 1 to 3, wherein a DC-DC conversion command value in the DC-DC converter is set in such a manner that a desired bus average voltage according to required power of the rotating electric machine is acquired.

5. The vehicle according to claim 4, wherein feedback control of the DC-DC conversion command value is performed according to a difference between a target bus voltage and an actual bus voltage.

6. The vehicle according to any one of claims 1 to 5, wherein in a case where the wireless power receiver is a current type, a bus voltage is increased as power consumption of the rotating electric machine is larger.

7. The vehicle according to any one of claims 1 to 5, wherein in a case where the wireless power receiver is a voltage type, a bus voltage is set according to power consumption of the rotating electric machine and average received power of the wireless power receiver.

8. The vehicle according to claim 6 or 7, wherein a bus target voltage is set in such a manner that the power supplied from the wireless power receiver to the first power supply is reduced in a case where a side of the wireless power receiver does not have a regeneration function of returning the power to a system side and the rotating electrical machine performs regenerative operation.

9. The vehicle according to any one of claims 1 to 8, wherein a PWM duty of when PWM control of rotational driving of the rotating electric machine is performed is determined on a basis of a fluctuation of the power received by the wireless power receiver from the wireless power transmitters.

10. The vehicle according to claim 9, wherein bus voltage is estimated on a basis of a vehicle position or a vehicle speed.

11. The vehicle according to any one of claims 1 to 10, further comprising

a rotating electric machine for power generation in addition to the rotating electric machine capable of generating the driving force for traveling, wherein

both the rotating electric machine for power generation and the DC-DC converter compensate for a fluctuation component in a bus voltage which fluctuation component is caused by a power ripple.

# FIG.1

VEHICLE
TRAVELING
DIRECTION

# FIG.2

# FIG.3

$P_{DWPT}$

TIME

# FIG.4

(a)

DWPT POWER

DC LINK VOLTAGE

(b)

MG OUTPUT

DC LINK VOLTAGE

# FIG.5

(a)

DWPT POWER

DC LINK VOLTAGE

(b)

MG OUTPUT

DC LINK VOLTAGE

# FIG.6

# FIG.7

# FIG.8

# FIG.9

## INTERNATIONAL SEARCH REPORT

| International application No. |
| --- |
| **PCT/JP2022/043773** |

**A.   CLASSIFICATION OF SUBJECT MATTER**

*B60L 58/20*(2019.01)i; *B60L 3/00*(2019.01)i; *B60L 5/00*(2006.01)i; *B60L 53/12*(2019.01)i; *B60M 7/00*(2006.01)i; *H02J 7/00*(2006.01)i; *H02J 50/10*(2016.01)i
FI:   B60L58/20; B60M7/00 X; B60L5/00 B; B60L53/12; H02J50/10; H02J7/00 P; H02J7/00 301D; B60L3/00 J

According to International Patent Classification (IPC) or to both national classification and IPC

**B.   FIELDS SEARCHED**

Minimum documentation searched (classification system followed by classification symbols)

B60L58/20; B60L3/00; B60L5/00; B60L53/12; B60M7/00; H02J7/00; H02J50/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
| --- | --- | --- |
| Y | JP 2020-195176 A (DENSO CORP.) 03 December 2020 (2020-12-03)<br>    paragraphs [0007]-[0016], fig. 1 | 1-6 |
| A | | 7-11 |
| Y | WO 2013/038441 A1 (TOYOTA JIDOSHA KABUSHIKI KAISHA) 21 March 2013 (2013-03-21)<br>    paragraphs [0017]-[0032], [0038]-[0044], fig. 1 | 1-6 |
| A | | 7-11 |
| Y | WO 2018/061400 A1 (HITACHI, LTD.) 05 April 2018 (2018-04-05)<br>    paragraphs [0014]-[0023], fig. 1 | 3-6 |
| A | | 7-11 |
| A | JP 2017-175698 A (IHI CORP.) 28 September 2017 (2017-09-28) | 1-11 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **01 February 2023** | **14 February 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2022/043773**

| Patent document cited in search report | | | Publication date (day/month/year) | Patent family member(s) | | | Publication date (day/month/year) |
|---|---|---|---|---|---|---|---|
| JP | 2020-195176 | A | 03 December 2020 | US | 2022/0085658 | A1 | |
| | | | | paragraphs [0014]-[0023], fig. 1 | | | |
| | | | | WO | 2020/241405 | A1 | |
| | | | | EP | 3979463 | A1 | |
| | | | | CN | 113892224 | A | |
| WO | 2013/038441 | A1 | 21 March 2013 | US | 2014/0203633 | A1 | |
| | | | | paragraphs [0026]-[0041], [0047]-[0052], fig. 1 | | | |
| | | | | EP | 2665151 | A1 | |
| | | | | CN | 103222148 | A | |
| WO | 2018/061400 | A1 | 05 April 2018 | (Family: none) | | | |
| JP | 2017-175698 | A | 28 September 2017 | US | 2018/0241301 | A1 | |
| | | | | WO | 2017/047455 | A1 | |
| | | | | EP | 3352329 | A1 | |
| | | | | CN | 108141060 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014147160 A